# EUROPÄISCHE PATENTSCHRIFT

(11) **EP 3 627 084 B1**
(45) Veröffentlichungstag und Bekanntmachung des Hinweises auf die Patenterteilung: **08.11.2023**
(21) Anmeldenummer: 19195205.0
(22) Anmeldetag: 03.09.2019
(51) Int. Cl.: F26B 15/16, B62D 65/18, F27B 9/26, F27D 9/00

(54) **BEHANDLUNGSANLAGE UND VERFAHREN ZUM BEHANDELN VON WERKSTÜCKEN**
TREATMENT PLANT AND METHOD FOR TREATING WORKPIECES
INSTALLATION DE TRAITEMENT ET PROCÉDÉ DE TRAITEMENT DES PIÈCES

(30) Priorität: 21.09.2018 DE 102018123269
(43) Veröffentlichungstag der Anmeldung: 25.03.2020
(73) Patentinhaber: Eisenmann GmbH, 71032 Böblingen (DE)
(72) Erfinder: Schulze, Herbert, 71134 Aidlingen (DE)
(74) Vertreter: Ostertag & Partner Patentanwälte mbB

(56) Entgegenhaltungen:
- DE-A1- 19 710 045
- DE-A1-102007 003 683
- DE-A1-102011 110 986
- DE-U1-202017 106 843
- DE-U1-202018 100 210
- US-A- 4 990 086
- US-A1- 2004 238 580
- US-A1- 2018 120 028

## Beschreibung

### HINTERGRUND DER ERFINDUNG

### 1. Gebiet der Erfindung

Die Erfindung betrifft eine Behandlungsanlage zum Behandeln von Werkstücken, insbesondere zum Beschichten und/oder zum Trocknen von Fahrzeugkarosserien, gemäß Anspruch 1.

Darüber hinaus betrifft die Erfindung ein Verfahren zum Behandeln von Werkstücken, insbesondere zum Beschichten und/oder zum Trocknen von Fahrzeugkarosserien, gemäß Anspruch 8.

### 2. Beschreibung des Standes der Technik

DE 102011110986 A1 und DE 202018100210 U1 offenbaren verschiedene Behandlungsanlagen zum Behandeln von Werkstücken.

Bei Behandlungseinrichtungen der eingangs genannten Art kann es durch den Verbindungsdurchgang zu einem Übertreten der potentiell schädlichen Atmosphäre des Behandlungsraumes in den Fahrraum der Transportwagen kommen, wodurch sich dort bezogen auf die atmosphärenempfindlichen Komponenten eine Schadatmosphäre ausbilden kann.

Insbesondere bei Trocknern, in denen beispielsweise Fahrzeugkarosserien bzw. eine zuvor aufgetragene Beschichtung getrocknet werden, ist diese übertretende Atmosphäre gegenüber der Luft im Fahrraum erwärmt und mit Lösemitteln angereichert, welche dann in dem in der Regel zunächst kühleren Fahrraum auskondensieren und sich auf den Komponenten des Transportsystems niederschlagen können. Ferner kann die durch die hohen Temperaturen im Trockner erwärmte Atmosphäre das Transportsystem unerwünscht hohen thermischen Belastungen aussetzen. Eine Wärmeübertragung kann auch durch den Teil des Fahrraumgehäuses erfolgen, der den Fahrraum von dem Behandlungsraum abtrennt.

Des Weiteren kann Luft aus Beschichtungsanlagen, die insbesondere bei der Beschichtung eines Werkstücks stark mit Overspray-Partikeln, beispielsweise eines Lacks, verunreinigt ist, ebenfalls in den Fahrraum gelangen. Die Overspray-Partikel können sich dann dort auf den Komponenten des Transportsystems absetzen und dort anhaften.

Durch die oben beschriebenen Effekte besteht regelmäßig die Gefahr, dass die für einen reibungslosen Fahrbetrieb essentiellen Komponenten so in ihrer Funktion beeinträchtigt werden, dass kostenaufwändige Wartungsarbeiten des Transportsystems erforderlich werden und/oder die erwähnten Komponenten unter Umständen ersetzt werden müssen.

Behandlungseinrichtungen der eingangs genannten Art können auch in Form von Montageeinrichtungen und/oder Kontrolleinrichtungen vorhanden sein, in denen die Werkstücke montiert oder an den Werkstücken Montagearbeiten vorgenommen werden bzw. in denen die Werkstücke im laufenden Produktionsprozess kontrolliert werden. Auch dabei können gegebenenfalls Partikel entstehen, die in den Fahrraum gelangen und die dortige Fördertechnik belasten können.

### ZUSAMMENFASSUNG DER ERFINDUNG

Es ist daher Aufgabe der Erfindung, einen Transportwagen, eine Behandlungsanlage und ein Verfahren der eingangs genannten Art bereitzustellen, welche diesen Gedanken Rechnung tragen.

Diese Aufgabe wird bei einem Transportwagen der eingangs genannten Art dadurch gelöst, dass
e) der Transportwagen eine Kompensationsvorrichtung mit sich führt, mittels welcher mindestens ein Schadparameter der umgebenden Schadatmosphäre kompensierbar ist;
   und/oder
f) der Transportwagen eingerichtet ist, mit einer Kompensationsvorrichtung zusammenzuarbeiten, mittels welcher mindestens ein Schadparameter der umgebenden Schadatmosphäre kompensierbar ist.

Erfindungsgemäß sind somit zwei Konzepte erkannt worden. Bei einem ersten Konzept führen die Transportwagen eine eigene Kompensationsvorrichtung mit sich, bei einem zweiten Konzept kann der Transportwagen mit einer gesonderten Kompensationsvorrichtung zusammenarbeiten, die in der Regel einer zugehörigen Behandlungsanlage zugeordnet ist und als solche eine bezogen auf den Transportwagen externe Kompensationsvorrichtung definiert.

In letzterem Fall ist es günstig, wenn am Transportwagen Koppelmittel vorgesehen sind, mittels welchen der Transportwagen mit der Kompensationsvorrichtung koppelbar ist.

Es ist von Vorteil, wenn die vom Transportwagen mitgeführte Kompensationsvorrichtung umfasst:
a) eine Strömungserzeugungsvorrichtung, insbesondere eine Ventilationsvorrichtung, mittels welcher ein einen oder mehrere Schadparameter kompensierender, insbesondere kühlender und/oder die umgebende Schadatmosphäre verdrängender, Stoffstrom, insbesondere ein Gasstrom, auf die atmosphärenempfindliche Komponente erzeugbar ist; und/oder
b) eine Wärmetauschervorrichtung; und/oder
c) ein Siedekühlelement, insbesondere ein Kompressionskühlelement;
   und/oder
d) einen thermoelektrischen Wandler, insbesondere ein Peltier-Element; und/oder
e) einen Gasspeicher, insbesondere einen Flüssig- oder Druckgasspeicher.

Vorzugsweise umfasst der Transportwagen ein Strömungsleitelement, mittels welchem ein einen oder mehrere Schadparameter kompensierender, insbesondere kühlender und/oder die umgebende Schadatmosphäre verdrängender, Stoffstrom, insbesondere ein Gasstrom, auf die atmosphärenempfindliche Komponente leitbar ist. Ein solches Strömungsleitelement kann von der mitgeführten Kompensationsvorrichtung umfasst sein oder mit der externen Kompensationsvorrichtung zusammenarbeiten.

Das erfindungsgemäße Konzept kann besonders effektiv eingesetzt werden, wenn die mindestens eine atmosphärenempfindliche Komponente des Transportwagens eine der folgenden Komponenten ist:
a) ein Sensor eines Umfeldsensorsystems des Transportwagens, mittels welchem Hindernisse erfassbar sind; und/oder
b) eine Messeinrichtung, mittels welcher die Geschwindigkeit des Transportwagens und/oder die Position des Transportwagens entlang der Behandlungsstrecke und/ oder das Gewicht des mindestens einen Werkstücks und/oder die Temperatur der Umgebung des Transportwagens erfassbar ist; und/oder
c) ein Datenträger, mittels welchem durch den Sensor (162) und/oder die Messeinrichtung erzeugte Daten speicherbar sind; und/oder
d) eine Energieversorgungseinrichtung oder eine autarke Energieversorgungseinrichtung, mittels welcher das Antriebssystem des Transportwagens mit Energie versorgbar ist; und/oder
e) eine Komponente des Fahrwerks; und/oder
f) Energieübertragungselemente, insbesondere Elemente zum Übertragen von elektrischer Energie, des Antriebssystems.

Im Hinblick auf die Behandlungsanlage wird die oben genannte Aufgabe dadurch gelöst, dass
e) eine Kompensationsvorrichtung vorhanden ist, mittels welcher mindestens ein Schadparameter der die atmosphärenempfindliche Komponente umgebenden Schadatmosphäre kompensierbar ist.

Die Kompensationsvorrichtung der Behandlungsanlage kann einerseits durch die oben genannte externe Kompensationsvorrichtung und andererseits durch die von einem Transportwagen mitgeführte Kompensationsvorrichtung definiert sein; letztere ist bei einer Behandlungsanlage von der Behandlungsanlage umfasst, da auch das Transportsystem Teil der Behandlungsanlage ist.

Wenn eine bezogen auf den Transportwagen externe Kompensationsvorrichtung vorhanden ist, ist es vorteilhaft, wenn die Kompensationsvorrichtung eine Strömungserzeugungsvorrichtung umfasst, mittels welcher ein einen oder mehrere Schadparameter kompensierender, insbesondere kühlender und/oder die umgebende Schadatmosphäre verdrängender, Stoffstrom, insbesondere ein Gasstrom, auf die atmosphärenempfindliche Komponente erzeugbar ist.

Außerdem ist es dann günstig, wenn die Strömungserzeugervorrichtung ein Strömungsleitsystem umfasst, mittels welchem der Stoffstrom in den Fahrraum leitbar ist.

Alternativ oder ergänzend ist es von Vorteil, wenn das Transportsystem der Behandlungsanlage Transportwagen mit einigen oder allen der oben genannten Merkmale umfasst.

Die erfindungsgemäße Kompensation einer Schadatmosphäre bzw. von zugehörigen Schadparametern ist besonders geeignet, wenn die Schadatmosphäre in dem Fahrraum dadurch entsteht, dass
a) heiße und/oder lösemittelangereicherte Trocknungsluft aus dem einen Trocknungsraum bildenden Behandlungsraum durch den Verbindungsdurchgang in den Fahrraum strömt;
   oder
b) mit Overspray beladene Luft aus dem einen Beschichtungsraum bildenden Behandlungsraum durch den Verbindungsdurchgang in den Fahrraum strömt.

Bei dem Verfahren der eingangs genannten Art wird die oben genannten Aufgabe dadurch gelöst, dass
e) mindestens ein Schadparameter der die atmosphärenempfindliche Komponente umgebenden Schadatmosphäre mittels einer Kompensationsvorrichtung kompensiert wird.

Vorteilhaft werden zu diesem Zweck Transportwagen und/oder eine Behandlungsanlage mit einigen oder allen oben jeweils beschriebenen Merkmalen verwendet.

### KURZE BESCHREIBUNG DER ZEICHNUNGEN

Nachfolgend werden Ausführungsbeispiele der Erfindung anhand der Zeichnungen näher erläutert. In diesen zeigen:
- Figuren 1a und 1b: Querschnitte einer Lackierkabine und eines Trockners einer Behandlungsanlage zum Behandeln von Werkstücken, wobei ein Transportsystem zum Transport der Werkstücke nur schematisch gezeigt ist;
- Figur 2: den Ausschnitt II, IV gemäß Figur 1, wobei ein Transportsystem gemäß einem ersten Ausführungsbeispiel in größerem Maßstab gezeigt ist, welches eine Vielzahl von schienengebundenen Transportwagen umfasst;
- Figuren 3a und 3b: perspektivische Ansichten jeweils eines schienengebundenen Transportwagens, anhand welchen vier Ausführungsbeispiele einer von den Transportwagen mitgeführten Kompensationsvorrichtung veranschaulicht sind, mittels welcher ein oder mehrere Schadparameter einer Schadatmosphäre kompensiert werden können;
- Figur 4: den Ausschnitt II, IV gemäß Figur 1, wobei ein Transportsystem gemäß einem zweiten Ausführungsbeispiel in größerem Maßstab gezeigt ist, welches eine Vielzahl von freifahrenden Transportwagen umfasst;
- Figuren 5a und 5b: perspektivische Ansichten jeweils eines freifahrenden Transportwagens, welche ebenfalls exemplarisch verschiedene Ausführungsbeispiel der Kompensationsvorrichtung mit sich führen;
- Figur 6: den der Figur 1b entsprechenden Querschnitt des Trockners, wobei als eine externe Kompensationsvorrichtung veranschaulicht ist, mit welcher der Transportwagen zusammenarbeiten kann, was anhand eines freifahrenden Transportwagens gezeigt ist;
- Figuren 7a und 7b: perspektivische Ansichten jeweils eines freifahrenden Transportwagens, anhand welchen Varianten der externen Kompensationsvorrichtung und die Zusammenarbeit der Transportwagen mit der externen Kompensationsvorrichtung veranschaulicht sind.

### BESCHREIBUNG BEVORZUGTER AUSFÜHRUNGSBEISPIELE

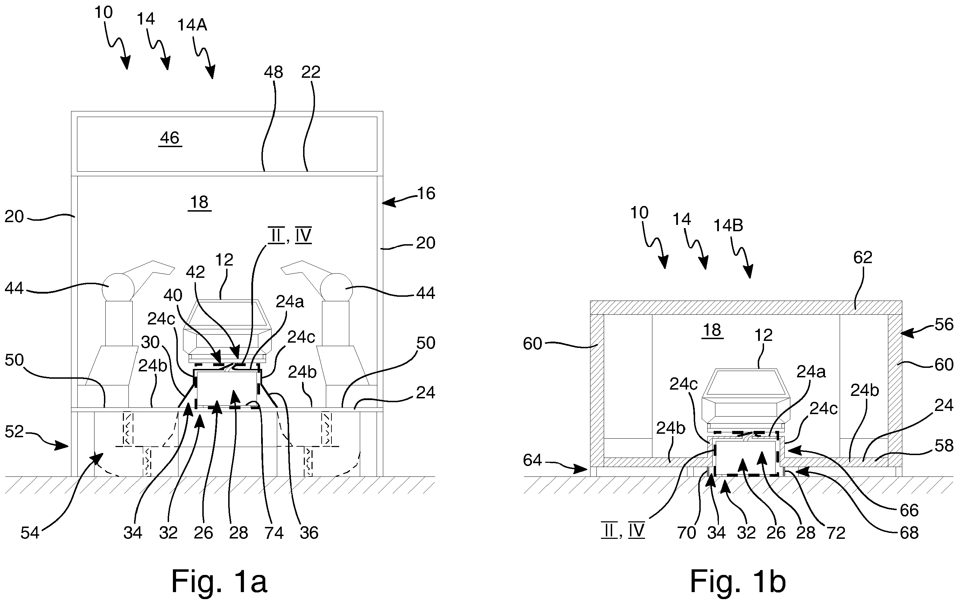

In den Figuren 1a und 1b bezeichnet 10 insgesamt eine Behandlungsanlage zum Behandeln von Werkstücken 12 mit einer oder mehreren Behandlungseinrichtungen 14, wobei Figur 1a als Behandlungseinrichtung 14 eine Lackierkabine 14A zeigt, in welcher Werkstücke 12, die beispielhaft als Fahrzeugkarosserien veranschaulicht sind, mit einem zu applizierenden Lack beschichtet werden. Figur 1b zeigt als Behandlungseinrichtung 14 einen Trockner 14B, in welchem beispielsweise der applizierte Lack getrocknet wird und welcher weiter unten erläutert wird.

Die Lackierkabine 14 umfasst ein Gehäuse 16, welches einen Behandlungsraum 18 begrenzt und Seitenwände 20, eine Decke 22 und einen Behandlungsraumboden 24 umfasst. Bei der Lackierkabine 14 definiert der Behandlungsraum 18 folglich einen Beschichtungsraum.

In Figur 1a bezeichnet 26 ein zunächst nur schematisch gezeigtes Fahrwerk eines Transportwagens 28, welches durch eine Schutzbarriere 30 von dem Behandlungsraum 18 getrennt ist, durch die Verunreinigungen und insbesondere Overspray abgehalten werden. Ein insgesamt mit 32 bezeichnetes Transportsystem umfasst eine Vielzahl solcher Transportwagen 28, auf denen die Werkstücke 12 transportiert werden. Dabei stellt die Schutzbarriere 30 einen Fahrraum 34 für das jeweilige Fahrwerk 26 der Transportwagen 28 bereit und definiert somit ein Fahrraumgehäuse 36. Das Fahrraumgehäuse 36 muss im Falle einer Lackierkabine 14A lediglich Overspray abhalten und anders als bei dem weiter unten beschriebenen Trockner 14B beispielsweise keine thermische oder sonstige Isolierung bereitstellen.

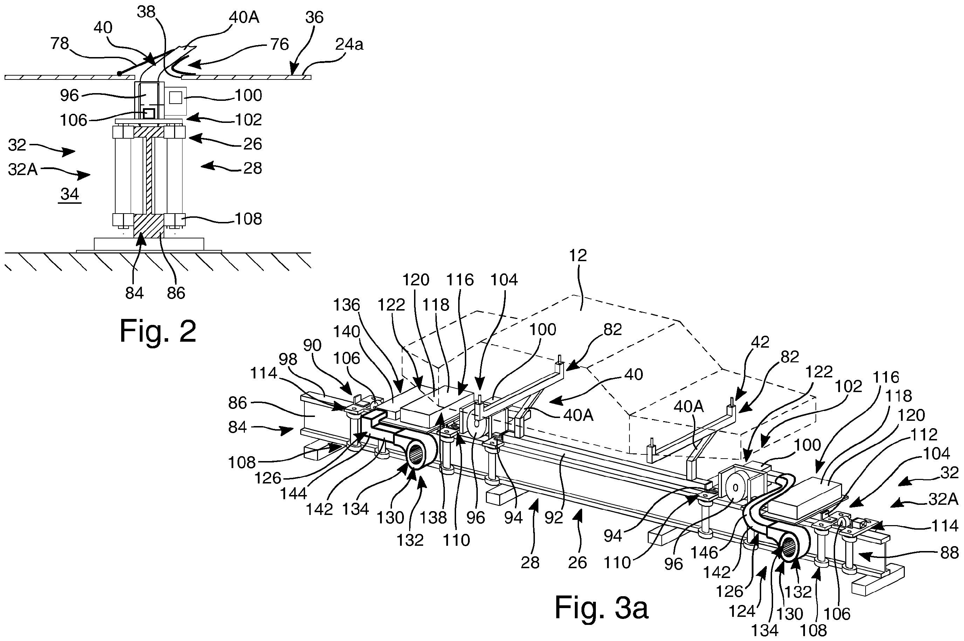

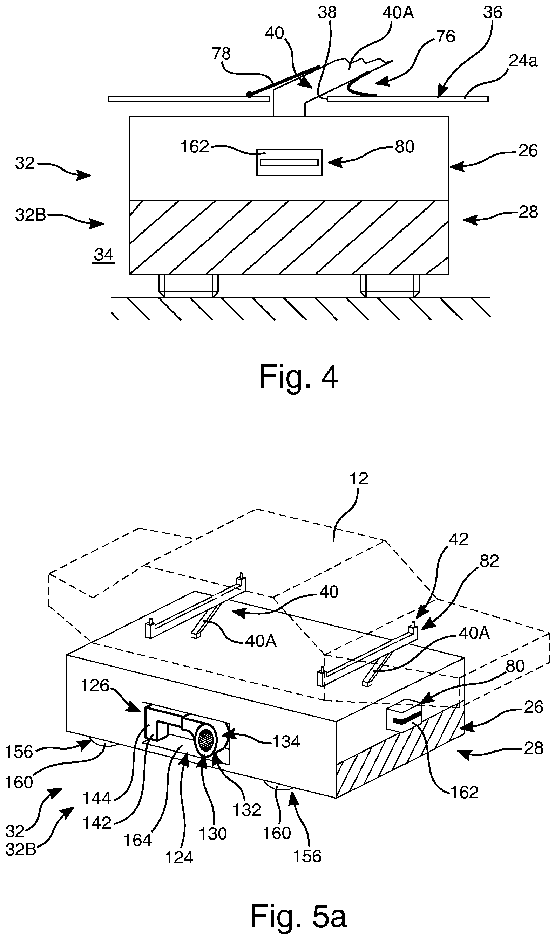

Das Fahrraumgehäuse 36 weist einen Verbindungsdurchgang 38 für eine Verbindungseinrichtung 40 des Transportwagens 28 auf, welche dessen Fahrwerk 26 mit einer Befestigungseinrichtung 42 koppelt, an welcher ein Werkstück 12 oder ein entsprechender Werkstückträger für Werkstücke 12 befestigt werden kann. Der Verbindungsdurchgang 38 ist lediglich in den Figuren 2 und 4 mit einem Bezugszeichen versehen.

Die Verbindungseinrichtung 40 umfasst wenigstens eine nach oben weisende, gewinkelte Strebe 40A, wobei aus Stabilitätsgründen zwei solche Streben 40A vorhanden sind; jede vorhandene Strebe 40A koppelt das Fahrwerk 26 des Transportwagens 28 mit der Befestigungseinrichtung 42. Bei einer Abwandlung können die Streben 40A auch geradlinig sein.

Wenn ein Werkstück 14 durch den Behandlungsraum 18 transportiert wird, bewegt sich das Fahrwerk 26 des Transportwagens 28 im Fahrraum 34 und führt die Befestigungseinrichtung 42 im Behandlungsraum 18 mit sich, wobei sich die Verbindungseinrichtung 40 durch den Verbindungsdurchgang 38 hindurch erstreckt.

Allgemein ausgedrückt sind die Behandlungseinrichtung 14 und das Transportsystem 32 so aufeinander abgestimmt, dass sich nur ein Teil des Transportsystems 32 in dem Behandlungsraum 18 bewegt, während der andere Teil des Transportsystems 32 außerhalb des Behandlungsraums 18 bewegt wird.

Dementsprechend ist der Fahrraum 34 also außerhalb des Behandlungsraums 18 angeordnet und bei den vorliegenden Ausführungsbeispielen nach oben durch eine Trennwand getrennt, die als Teil des Behandlungsraumbodens 24 ausgebildet sein kann. Eine Anordnung des Fahrraums 34 außerhalb des Behandlungsraums 18 ist daher derart zu verstehen, dass es eine strukturelle Trennung zwischen dem Behandlungsraum 18 und dem Fahrraum 34 durch die angesprochene Trennwand gibt.

Beim vorliegenden Ausführungsbeispiel der Lackierkabine 14A ist diese Trennwand ein Abschnitt 24a des Behandlungsraumbodens 24, wobei der Fahrraum 34 unterhalb dieses Abschnitts 24a des Behandlungsraumbodens 24 angeordnet ist. Beim vorliegenden Ausführungsbeispiel hat der Behandlungsraumboden 24 insgesamt einen gewinkelten Verlauf und weist seitlich neben dem Abschnitt 24a zwei Abschnitte 24b auf, welche gegenüber dem Abschnitt 24a nach unten versetzt sind und an ihren zur Mitte des Behandlungsraumes 18 weisenden Rändern durch jeweils einen nach oben verlaufenden Abschnitt 24c mit den gegenüberliegenden Rändern des Abschnitts 24a verbunden sind. Die Abschnitte 24c können abweichend von Figur 1a auch geradlinig sein. Bei dieser Ausbildung überlappt der Fahrraum 34 im Querschnitt mit dem Behandlungsraum 18. Bei Abwandlungen kann die Trennwand auch eine Seitenwand oder die Decke des Behandlungsraumes 18 sein.

Das Fahrraumgehäuse 36 ist bei einer Behandlungseinrichtung 14 vorzugsweise so dimensioniert, dass die Gehäusewände in einem Abstand von maximal 40 cm von einem am weitesten nach außen abragenden Bauteil des Transportwagens 28 entfernt sind. Günstiger ist es, wenn dieser Abstand zwischen 15 cm und 30 cm beträgt. Besonders bevorzugt ist dieser Abstand zwischen 1 cm und 15 cm groß.

In dem Behandlungsraum 18 der Lackierkabine 14 sind an und für sich bekannte Lackierroboter 44 angeordnet. Die Decke 22 der Lackierkabine 14 ist in üblicher Weise als untere Begrenzung eines Luftzuführraumes 46 mit Filterdecke 48 ausgebildet. Nach unten hin ist der Behandlungsraum 18 offen, wozu der Behandlungsraumboden 24 in den Abschnitten 24b neben dem Fahrraumgehäuse 36 als strömungsdurchlässiger und zumindest bereichsweise begehbarer Gitterrost 50 ausgebildet ist. Aus dem Luftzuführraum 46 tritt Kabinenluft in den Behandlungsraum 18 der Lackierkabine 14 ein und nimmt auf ihrem Strömungsweg nach unten Overspray auf, bevor sie über den durchlässigen Gitterrost 50 in einen Bereich 52 unterhalb des Behandlungsraumes 18 strömt. In diesem Bereich 52 befindet sich eine Abscheidevorrichtung 54, mit deren Hilfe mitgerissenes Overspray aus der Kabinenluft entfernt wird; die gereinigte Kabinenluft kann dann, gegebenenfalls nach einer vorgegebenen Konditionierung, in einem Kreislauf wieder zum Luftzuführraum 46 geführt werden. Eine Abscheidevorrichtung 54 kann beispielsweise austauschbare Filtereinheiten umfassen, als elektrostatisch arbeitende Abscheidevorrichtung konzipiert sein oder auch diese beiden Filtertechniken kombinieren; beide Varianten sind an und für sich bekannt und müssen daher nicht weiter erläutert werden. Auch andere bekannte Filtertechniken können umgesetzt und kombiniert werden.

Bei dem in Figur 1b gezeigten Trockner 14B ist der Behandlungsraum 18 von einem Trocknergehäuse 56 begrenzt, welches den Behandlungsraumboden 24 als thermisch isolierenden Trocknerboden 58 sowie außerdem thermisch isolierende Seitenwände 60 und eine thermisch isolierende Decke 62 umfasst. Der Behandlungsraum 18 definiert bei dem Trockner 14B folglich einen Trockenraum.

Sowohl die Lackierkabine 14A als auch der Trockner 14B werden im Durchlauf betrieben und weisen folglich an einem stirnseitigen Ende einen Eingang und am gegenüberliegenden stirnseitigen Ende einen Ausgang auf, die in den gezeigten Schnitten nicht zu erkennen sind. Der jeweilige Behandlungsraum 18 ist dann als Beschichtungstunnel bzw. als Trockentunnel ausgebildet. Bei vorhandenen Fahrwegverzweigungen im Behandlungsraum 18 kann die Anzahl der Eingänge von der Anzahl der Ausgänge verschieden sein. Es kommen jedoch auch Batch-Systeme in Frage, bei denen der Behandlungsraum nur einen einzigen Zugang hat, über den die Werkstücke 12 in den Behandlungsraum hinein und nach der Behandlung wieder aus dem Behandlungsraum heraus gefördert werden.

Auch der Trockner 14B und das Transportsystem 32 sind so aufeinander abgestimmt, dass sich nur ein Teil des Transportsystems 32 in dem Behandlungsraum 18 bewegt, während der andere Teil des Transportsystems 32 außerhalb des Behandlungsraums 18 bewegt wird.

Zum Aufbau des Fahrraumes 34 gilt das oben zur Lackierkabine 14a Gesagte sinngemäß entsprechend, wobei das Fahrraumgehäuse 36 im Unterschied zur Lackierkabine 14A nicht nur als Schutzbarriere gegen Verunreinigungen ausgebildet ist, sondern thermisch isolierend ist. Auch sind die Abschnitte 24b des Behandlungsraumbodens 24 bei dem Trockner 14B nicht als Gitterrost ausgebildet, vielmehr sind alle Abschnitte 24a, 24b und 24c des gewinkelten Behandlungsraumbodens 24 in geeigneter Weise thermisch isolierend und Teil des Trocknergehäuses 56.

Zwischen dem Behandlungsraumboden 24 und einem Anlagenboden sind vertikale Stützpfeiler 64 zu erkennen, die den Behandlungsraum 18 im Wesentlichen am nicht gesondert bezeichneten Anlagen- oder Hallenboden abstützen.

Bei der in Figur 1b gezeigten Ausbildung überlappt der Fahrraum 34 im Querschnitt in einem oberen Bereich 66 mit dem Behandlungsraum 18. Ferner ist ein unterer Bereich 68 auf einem Höhenniveau unter den Abschnitten 24b des Behandlungsraumbodens 24 angeordnet.

Bei einer Abwandlung kann auch eine Anordnung wie bei der Lackierkabine 14B ausgebildet sein, bei welcher der Fahrraum 34 im Querschnitt vollständig mit dem Behandlungsraum 18 überlappt.

Bei einer weiteren Abwandlung, die auch bei der Lackierkabine 14A umgesetzt werden kann, kann der Behandlungsraumboden 24 auch plan sein, dann bildet ein entsprechender Abschnitt 24a des Behandlungsraumbodens 24 die Trennwand zwischen dem Behandlungsraum 18 und dem Fahrraum 34, wobei dieser Abschnitt 24a dann in seitliche Richtung unmittelbar und in derselben horizontalen Ebene in Abschnitte 24b übergeht, ohne dass es vertikale Abschnitte 24c gibt. Der Fahrraum 34 ist dann vollständig auf einem Höhenniveau unter dem Behandlungsraumboden 24 angeordnet.

Bei der Behandlungseinrichtung 14, d.h. vorliegend entsprechend bei der Lackierkabine 14A und bei dem Trockner 14B, ist der Fahrraum 34 durch das Fahrraumgehäuse 36 definiert, d.h. zumindest bereichsweise begrenzt. Bei den vorliegenden Ausführungsbeispielen umfasst das Fahrraumgehäuse 36 jeweils die vertikalen Abschnitte 24c des Behandlungsraumbodens 24 und dessen Abschnitt 24a, d.h. die Trennwand zum Behandlungsraum 18.

Bei dem Trockner 14B umfasst das Fahrraumgehäuse 36 außerdem noch zwei weitere Gehäusewände 70, 72, welche sich in dem unteren Bereich 68 in Längsrichtung des Behandlungsraumes 18 und vom Behandlungsraumboden 24 nach unten erstrecken. Diese weiteren Gehäusewände 70, 72 bilden in etwa eine Weiterführung der vertikalen Abschnitte 24b des Behandlungsraumbodens nach unten. Das Fahrraumgehäuse 36 kann auch einen gesonderten Gehäuseboden aufweisen; ein solcher gesonderter Boden ist bei der Lackierkabine 14A vorhanden und in Figur 1a mit 74 bezeichnet. Bei dem Trockner 14B übernimmt ein entsprechender Abschnitt des Anlagenbodens diese Aufgabe.

An den Stirnseiten der Behandlungseinrichtung 14 ist das Fahrraumgehäuse 36 offen. Bei einer Abwandlung könnten dort Schleusen vorhanden sein; in jedem Fall muss ermöglicht sein, dass die Transportwagen 28 am Eingang der Behandlungseinrichtung 14 in den Fahrraum 34 einfahren und am Ausgang der Behandlungseinrichtung 14 aus dem Fahrraum 34 ausfahren können. Grundsätzlich muss das Fahrraumgehäuse 36 jedenfalls nicht strömungs- oder fluiddicht ausgebildet sein, wobei dies als Abwandlung vorgesehen sein kann.

Bei jeder Behandlungseinrichtung 14 ist der Verbindungsdurchgang 38, der den Fahrraum 34 mit dem Behandlungsraum 18 verbindet, komplementär zu der Verbindungseinrichtung 40 des Transportwagens 28. Beim vorliegenden Ausführungsbeispiel der Behandlungsanlage 10 ist der Verbindungsdurchgang 38 geradlinig und als geradliniger Durchgangsschlitz oder-spalt ausgebildet, der sich zwischen dem Eingang und dem Ausgang in dem Abschnitt 24a des Behandlungsraumbodens 24 erstreckt. Der Verbindungsdurchgang 38 kann aber auch gewinkelt, das heißt im Querschnitt zum Beispiel labyrinthartig ausgebildet sein. Die Verbindungseinrichtung 40 ist dann entsprechend ausgebildet.

Durch den Verbindungsdurchgang 38 kann einerseits die mit Schadstoffen wie Overspray oder Lösemitteln belastete Atmosphäre aus dem Behandlungsraum 18 in den Fahrraum 34 strömen und andererseits Atmosphäre aus dem Fahrraum 34, die beispielsweise mit Abrieb oder Schmiermitteln des Transportsystems 32 im Fahrraum 34 belastet sein kann, in den Behandlungsraum 18 gelangen. Um dies zumindest abzumildern, ist außerdem noch eine Abschirmeinrichtung 76 vorhanden. Diese umfasst bei den vorliegenden Ausführungsbeispielen eine Schuppendichtung 78.

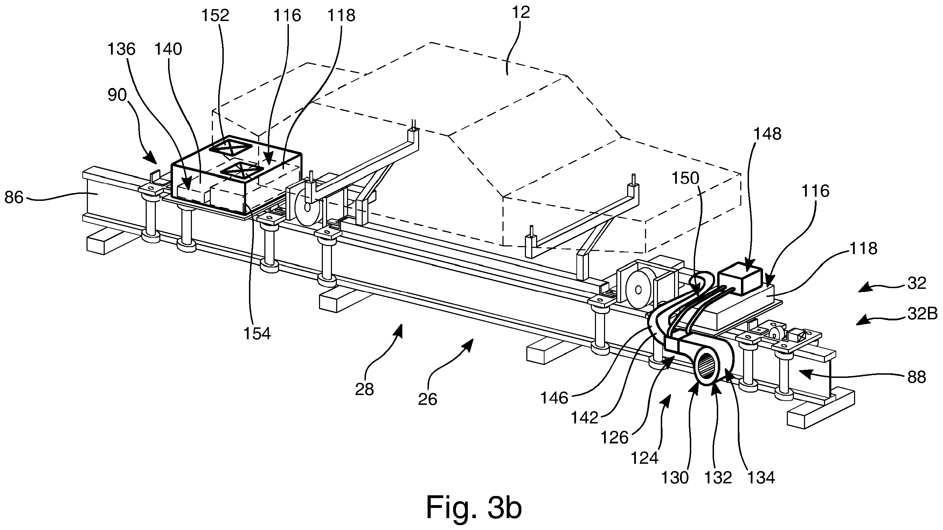

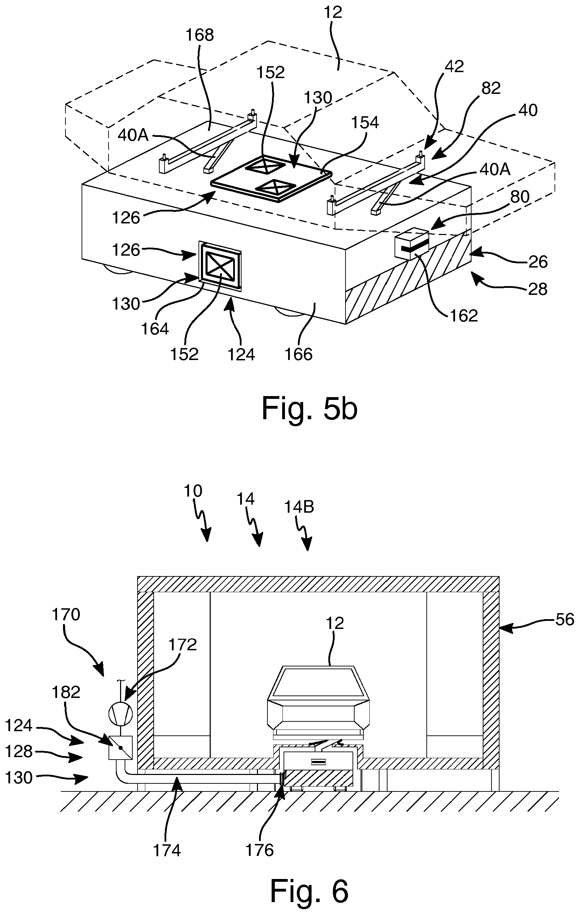

In den Figuren 2, 3a und 3b ist nun als erstes Ausführungsbeispiel des Transportsystems 32 ein schienengebundenes Transportsystem 32A gezeigt, wogegen die Figuren 4, 5a und 5b als zweites Ausführungsbeispiel ein Transportsystem 32B veranschaulichen, bei dem die Transportwagen 28 als freifahrende Transportwagen im Sinne von fahrerlosen Transportsystemen ausgebildet sind, die dem Fachmann als sogenannte FTS geläufig sind und bei denen die Transportwagen 28 ein Umfeldsensorsystem 80 mit sich führen. Lediglich in den Figuren 3a und 5b sind alle Komponenten und Bauteile mit Bezugszeichen versehen.

Bei beiden Transportsystemen 32A, 32B der vorliegenden Ausführungsbeispiele ist die Befestigungseinrichtung 42 auf Werkstücke 12 in Form von Fahrzeugkarosserien abgestimmt. Hierzu umfasst die Befestigungseinrichtung 42 ein Tragprofil 82 mit Lagerbolzen, welche nicht eigens gekennzeichnet sind und in an und für sich bekannter Art und Weise entsprechenden Gegenelementen an der Fahrzeugkarosserie zusammenarbeiten, so dass die Fahrzeugkarosserie 14 an der Befestigungseinrichtung 42 fixiert werden kann. Die Befestigungseinrichtung 42 kann auch mehrere Sätze solcher Lagerbolzen aufweisen, die an unterschiedliche Fahrzeugkarosserien mit verschiedenen Abmessungen und Ausgestaltungen angepasst sind, so dass die Befestigungseinrichtung 42 flexibel für unterschiedliche Fahrzeugkarosserietypen genutzt werden kann.

Die Befestigungseinrichtung 42 nimmt eine Fahrzeugkarosserie somit unmittelbar auf, ohne dass die Fahrzeugkarosserie 14 auf einem Werkstückträger, wie beispielsweise einem an und für sich bekannten Skid, befestigt ist.

Das schienengebundene Transportsystem 32A umfasst ein Schienensystem 84 mit einer Tragschiene 86, auf welcher die Transportwagen 28 verfahrbar sind und welche in an und für sich bekannter Weise ein I-förmiges Profil aufweist und am Anlagenboden verankert ist. Die somit bodengebundene Tragschiene 86 ist einspurig; alternativ kann das Schienensystem 84 aber auch als mehrspuriges System, insbesondere als zweispuriges System ausgeführt sein. Ebenso kann die Tragschiene 86 ein anderes Profil haben.

Das Fahrwerk 26 läuft auf der Tragschiene 86 ab und umfasst beim vorliegenden Ausführungsbeispiel eine in Transportrichtung vorauseilende Vorläufereinheit 88 und eine in Transportrichtung nacheilende Nachläufereinheit 90.

Der Transportwagen 28 kann derart ausgebildet sein, dass er in der Lage ist, Kurvenabschnitte der Tragschiene 86 zu durchfahren. Hierfür können die Vorläufereinheit 88 und die Nachläufereinheit 90 durch eine Längsstrebe 92 an Schwenkgelenken 94 gelenkig miteinander verbunden sein. Die Längsstrebe 92 ist dann mit der Verbindungseinrichtung 40 gekoppelt. Darüber hinaus kann der Transportwagen 28 derart eingerichtet sein, dass er auch geneigte Abschnitte, das heißt in Transportrichtung gesehen Steigungsabschnitte oder Gefälleabschnitte, der Tragschiene 86 überwinden kann.

Die Vorläufereinheit 88 und die Nachläufereinheit 90 sind weitgehend baugleich, wobei einzelne Bauteile und Komponenten auf einen geraden Abschnitt der Tragschiene 86 bezogen auf eine Ebene senkrecht zur Transportrichtung gespiegelt positioniert sind. Einander entsprechende Bauteile und Komponenten der Vorläufereinheit 88 und der Nachläufereinheit 90 tragen dieselben Bezugszeichen. Die nachfolgend anhand der Vorläufereinheit 88 beschriebenen Bauteile sind entsprechend auch von der Nachläufereinheit 90 umfasst, sofern nichts anderes erläutert wird.

Die Vorläufereinheit 88 lagert eine Antriebsrolle 96, welche auf einer Antriebslauffläche 98 der Tragschiene 86 abrollt und mittels eines Antriebsmotors 100 angetrieben wird, der von der Vorläufereinheit 88 mitgeführt wird. Beim vorliegenden Ausführungsbeispiel ist die Antriebslauffläche 98 der Tragschiene 86 die Fläche auf der Oberseite der Tragschiene 86 und verläuft entsprechend in horizontalen Abschnitten der Tragschiene 86 ebenfalls horizontal. Bei nicht eigens gezeigten Abwandlungen kann die Antriebslauffläche 98 auch zum Beispiel vertikal verlaufen; in diesem Fall drückt die Antriebsrolle 96 als Reibrad seitlich gegen die Tragschiene 86 an.

Allgemein ausgedrückt führen die erfindungsgemäßen Transportwagen 28 jeweils ein eigenes Antriebssystem 102, mit sich, so dass die Transportwagen 28 unabhängig voneinander angetrieben und verfahren werden können. Bei dem vorliegenden Ausführungsbeispiel ist das eigene Antriebssystem 102 durch die Antriebsrollen 96 und die zugehörigen Antriebsmotoren 100 ausgebildet.

Um zu verhindern, dass die Vorläufereinheit 88 in Transportrichtung, d.h. um eine horizontale Achse senkrecht zur Transportrichtung, verkippt, lagert eine Fahrwerkeinheit 104 der Vorläufereinheit 88 in einem Abstand von der Antriebsrolle 96 eine passive Stützrolle 106, welche ebenfalls auf der Antriebslauffläche 98 der Tragschiene 86 abrollt. Außerdem lagert die Fahrwerkeinheit 104 der Vorläufereinheit 88 mehrere seitliche Führungsrollen 108, welche von beiden Seiten der Tragschiene 86 anliegen und so in an und für sich bekannter Weise ein Verkippen der Vorläufereinheit 88 zur Seite verhindern.

Die Vorläufereinheit 88 umfasst ferner einen Antriebsrahmen 110, welcher die Antriebsrolle 96 mit dem Antriebsmotor 100 und zu beiden Seiten der Tragschiene 86 Führungsrollen 108 lagert. Der Antriebsrahmen 110 ist über eine Stütztraverse 112 gelenkig mit einem Stützrahmen 114 verbunden, welcher seinerseits die Stützrolle 106 und ebenfalls zu beiden Seiten der Tragschiene 86 Führungsrollen 108 lagert. Die gelenkige Verbindung des Antriebsrahmens 110 mit dem Stützrahmen 114 erfolgt über nicht eigens mit einem Bezugszeichen versehen Kupplungsgelenke, die eine Durchfahrt von Kurvenfahrten der Tragschiene 86 erlauben.

Für die Energieversorgung der Antriebsmotoren 100 der Vorläufereinheit 88 und der Nachläufereinheit 90 führt der Transportwagen 28 beim vorliegenden Ausführungsbeispiel eine autarke Energieversorgungseinrichtung 116 mit sich. Darunter ist eine Energieversorgungseinrichtung zu verstehen, welche die Energieversorgung der Antriebsmotoren 100 im Fahrbetrieb, das heißt während der Bewegung des Transportwagens 28, unabhängig von externen Energiequellen sicherstellt.

Beim vorliegenden Ausführungsbeispiel ist die Energieversorgungseinrichtung 116 mit wiederaufladbaren Energiespeichern 118 mit wenigstens einer Energiespeichereinheit 120 ausgestaltet. An jeder Fahrwerkeinheit 104 ist dabei eine Energiespeichereinheit 120 für den jeweiligen Antriebsmotor 100 vorhanden. Eine wiederaufladbare Energiespeichereinheit 120 für elektrische Energie kann in Form eines Akkumulators oder eines Kondensators bereitgestellt sein. Bei einer nicht eigens gezeigten Abwandlung kann auch nur eine einzige Energiespeichereinheit 120 für beide Antriebsmotoren 100 vorgesehen sein. Alternativ können auch Druckgasspeicher als Energiequelle für Druckgasantriebe vorhanden sein.

Alternativ werden die Transportwagen 28 in an und für sich bekannter Art und Weise über eine Schleifleitung an der Tragschiene 86 und entsprechende Schleifkontakte an den Transportwagen 28 mit Energie versorgt. Solche Einrichtungen sind allgemein als Energieübertragungselemente des Antriebssystems 102 zu verstehen.

Jeder Transportwagen 28 weist nun atmosphärenempfindliche Komponenten auf, welche allgemein mit 122 bezeichnet sind und deren Betrieb durch einen oder mehrere Schadparameter einer die atmosphärenempfindliche Komponente 122 umgebenden Schadatmosphäre, insbesondere durch die Temperatur oder die Zusammensetzung der umgebenden Schadatmosphäre, beeinträchtigt werden kann.

Allgemein ausgedrückt können solche atmosphärenempfindliche Komponenten in unerwünschter und negativer Weise auf eine von einer Normalatmosphäre abweichende Umgebungsatmosphäre reagieren, welche in einem solchem Fall eine entsprechende Schadatmosphäre definiert. Unter einer Normalatmosphäre kann beispielsweise eine die Behandlungsanlage 10 umgebende Atmosphäre, insbesondere raumtemperierte Luft, verstanden werden. Eine Schadatmosphäre enthält insbesondere Partikel, welche zündfähig, klebrig und/oder elektrisch leitfähig sind und/oder eine Schadatmosphäre hat eine Temperatur von mehr als 40°C. Schadparameter definieren somit Eigenschaften der Schadatmosphäre, auf welche die atmosphärenempfindlichen Komponenten 122 der Transportwagen 28 empfindlich reagieren. Beispielhaft können vorliegend also die Temperatur einen ersten Schadparameter und die Zusammensetzung der Schadatmosphäre einen zweiten Schadparameter abbilden, wobei bezogen auf die Zusammensetzung auch lediglich eine Einzelverbindung, die in der Schadatmosphäre vorhanden ist, einen gesonderten Schadparameter definierten kann.

Mit der bezogen auf die atmosphärenempfindliche Komponente 122 umgebenden Schadatmosphäre ist die Atmosphäre in einem umgebenden Volumen zu verstehen, in dem dieses Atmosphäre die atmosphärenempfindliche Komponente 122 in unerwünschter Weise beeinflussen kann. Es kann unschädlich sein, dass in Bereichen weiter weg von der oder den atmosphärenempfindlichen Komponenten 122 die Schadatmosphäre unverändert vorliegt, wenn dies zu keiner Beeinträchtigung der atmosphärenempfindlichen Komponenten 122 und somit der Betriebsfähigkeit des Transportwagens 28 führt.

Zu atmosphärenempfindlichen Komponenten 122 des Transportwagens 28 zählen unter anderem Bauteile des Fahrwerks 26 als solches, beispielsweise der Vorläufereinheit 88 und der Nachläufereinheit 90 und dort insbesondere gelenkige Verbindungen oder die Drehlagerungen vorhandener Rollen. Vor allem aber elektronische Komponenten, bei den schienengebundenen Transportwagen insbesondere die Energieversorgungseinrichtung 116 und deren zugehörigen Bauteile, zum Beispiel der Energiespeicher 118 und die Energieversorgungseinheit 120, aber auch die oben angesprochenen Energieübertragungselemente in Form von beispielsweise Schleifleitungen und Schleifkontakten sind atmosphärenempfindliche Komponenten 122.

In dem Fahrraum 34 kann eine solche, für diese Komponenten 122 belastende Schadatmosphäre entstehen, indem, wie oben erwähnt, die mit Schadstoffen belastete Atmosphäre aus dem Behandlungsraum 18 durch den Verbindungsdurchgang 38 in den Fahrraum 34 strömen. Auch bei einer vorhandenen Abschirmeinrichtung 76 baut sich in dem Fahrraum 34 im Laufe der Zeit eine Schadatmosphäre auf. Im Falle der Lackierkabine 14A sind die Schadstoffe insbesondere durch Overspray-Partikel gebildet. Bei dem Trockner 14B ist die Atmosphäre im Behandlungsraum 18 mit Lösemittel angereichert; diese Lösemittelbestandteile belasten die Fördertechnik.

Bei dem Trockner 14B ist die Atmosphäre im Behandlungsraum 18 zudem heiß, weshalb sich die Atmosphäre im Fahrraum 34 im Laufe der Zeit auf eine Temperatur erhöhen kann, bei der die atmosphärenempfindlichen, in diesem Fall temperaturempfindlichen, Komponenten 122 Schaden nehmen können. Der Fahrraum 34 kann sich auch erwärmen, ohne dass Atmosphäre aus dem Behandlungsraum 18 durch den Verbindungsdurchgang 38 strömt, da über den Abschnitt 24a des Behandlungsraumbodens 24 Wärmeenergie von dem Behandlungsraum 18 an den Fahrraum 34 übertragen werden kann, wenn die thermische Isolierung zu schwach ist.

Die Behandlungseinrichtung 14 kann auch als Bearbeitungsstation ausgebildet sein, bei der die Werkstücke 12 beispielsweise abgeschliffen werden und entsprechende Schleifpartikel entstehen. Auch solche Schleifpartikel können gegebenenfalls in den Fahrraum 34 gelangen und die atmosphärenempfindlichen Komponenten 122 schädigen oder zumindest belasten.

Um dem entgegenzuwirken, gibt es ein Kompensationssystem 126, durch welches mindestens ein Schadparameter der die atmosphärenempfindliche Komponente 122 umgebenden Schadatmosphäre kompensiert werden kann.

Unter einer Kompensation der Schadatmosphäre wird verstanden, dass eine oder mehrere die Schadatmosphäre antagonisierende Maßnahmen getroffen werden, um zumindest, d.h. in jedem Fall, die Schadatmosphäre, welche die empfindliche Komponente 122 umgibt, in eine Atmosphäre zu verändern, die weniger und im besten Fall keine schädliche Wirkung auf die atmosphärenempfindliche Komponente 122 hat.

Dies bedeutet, dass der betrachtete Schadparameter mit Hilfe des Kompensationssystems 124 auf einen Wert verändert wird, bei welchem die umgebende Atmosphäre die atmosphärenempfindliche Komponente 122 zumindest geringer belastet, als vor der Änderung des Schadparameters. Im Idealfall wird der betrachtete Schadparameter auf einen Wert verändert, welcher die erforderlichen Betriebsbedingungen der atmosphärenempfindlichen Komponente 122 mitdefiniert, bei denen diese einwandfrei funktioniert.

Wenn der Schadparameter beispielsweise eine zu hohe Temperatur ist, wird die Temperatur entsprechend auf einen geringeren Wert abgesenkt. Wenn der Schadparameter die Zusammensetzung der umgebenden Atmosphäre betrifft, wird die Zusammensetzung der umgebenden Komponente verändert. Dies kann beispielsweise durch einen Atmosphärenaustausch im Umfeld der atmosphärenempfindlichen Komponente erfolgen. Auch ein Verdünnen schädlicher gasförmiger oder sich im Übergang von flüssig zu gasförmig befindender Stoffe auf eine Konzentration, die für die Komponente 122 vernachlässigbar gering ist, kann durchgeführt werden. Feste Mikropartikel können von einem Gasvolumenstrom abgeführt werden, bevor sie an der Komponente 122 einen funktionsbeeinträchtigenden Schaden anrichten. Gegebenenfalls können auch zum Beispiel gezielte chemische Maßnahmen gegen eine bestimmte schädliche Komponente der umgebenden Schadatmosphäre ergriffen werden, indem geeignete Chemikalien zugesprüht werden.

Das Kompensationssystem 124 kann nach zwei alternativen oder einander ergänzenden Konzepten arbeiten. Bei einem ersten Konzept führt der Transportwagen 28 eine Kompensationsvorrichtung 126 mit sich, mittels welcher mindestens ein Schadparameter der umgebenden Schadatmosphäre kompensiert werden kann. Dies wird im Weiteren anhand der Figuren 2, 3a, 3b, 4, 5a und 5b beschrieben.

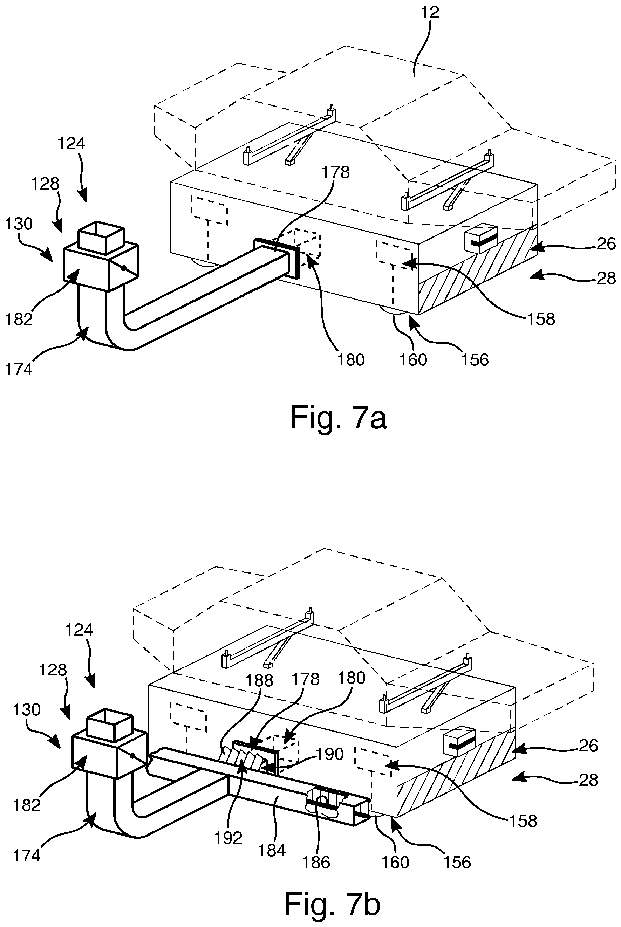

Bei einem zweiten Konzept ist der Transportwagen 28 eingerichtet, mit einer bezogen auf den Transportwagen 28 externen Kompensationsvorrichtung 128 zusammenzuarbeiten, mittels welcher mindestens ein Schadparameter der umgebenden Schadatmosphäre kompensiert werden kann. Die Bezeichnung "extern" soll verdeutlichen, dass diese Kompensationsvorrichtung 128 nicht von dem Transportwagen 28 mitgeführt ist. In der Praxis ist eine solche externe Kompensationsvorrichtung 128 der Behandlungsanlage 10 zuzuordnen, in welcher das Transportsystem 32 mit den Transportwagen 28 eingesetzt wird. Dies wird weiter unten im Zusammenhang mit den Figuren 6, 7a und 7b erläutert.

Wenn es für die Kompensation, d.h. das Ausgleichen oder das Unschädlichmachen, der Schadatmosphäre bereits ausreicht, die Umgebungstemperatur an der oder den atmosphärenempfindlichen Komponenten 122 zu senken, sind die Kompensationsvorrichtungen 126, 128 als Kühlvorrichtung 130 ausgebildet. Dabei kann eine Verringerung der Temperatur einerseits durch einen Atmosphärenaustausch oder auch durch einen Wärmeaustausch erfolgen.

Die Figuren 3a und 3b veranschaulichen als mitgeführte Kompensationsvorrichtung 126 eine Strömungserzeugungsvorrichtung 132, mittels welcher ein Stoffstrom auf die atmosphärenempfindliche Komponente 122 erzeugt werden kann, der einen oder mehrere Schadparameter kompensiert. Insbesondere kühlt der erzeugte Stoffstrom die atmosphärenempfindliche Komponente und/oder er verdrängt die umgebende Schadatmosphäre. In der Praxis ist der Stoffstrom ein Gasstrom, wobei es sich vorzugsweise um einen Luftstrom handelt.

In den Figuren 3a und 3b sind an den gezeigten Transportwagen 28 unterschiedliche beispielhafte Möglichkeiten gezeigt, wie eine Schadatmosphäre mittels verschiedenartiger Kompensationsvorrichtungen 126 kompensiert werden können. Dabei sind an den Vorläufereinheiten 88 und Nachläufereinheiten 90 jeweils unterschiedliche Kompensationsvorrichtungen 126 veranschaulicht. Verschiedenartige Kompensationsvorrichtungen 126 können auch in der Praxis von ein und demselben Transportwagen 28 mitgeführt werden, beispielsweise, wenn eine effektivere Kompensation von Schadparametern in der Umgebung von unterschiedlichen atmosphärenempfindlichen Komponenten 122 durch jeweils unterschiedliche Arten von Kompensationsvorrichtungen 126 erreicht werden kann.

Der Transportwagen 28 der Figur 3a führt nun zwei Strömungserzeugungsvorrichtungen 132 mit sich, die beim gezeigten Ausführungsbeispiel als Ventilationsvorrichtung 134 veranschaulicht und beim gezeigten Ausführungsbeispiel jeweils an einer Seite der Fahrwerkeinheit 104 der Vorläufereinheit 88 und der Nachläufereinheit angeordnet sind. Als atmosphärenempfindliche Komponenten 122 sind beispielhaft eine Steuerungskomponente 136 und eine Antriebskomponente 138 des Antriebssystems 102 des Transportwagens 28 herangezogen, bei denen es sich konkret um eine Steuereinrichtung 140 und den Antriebsmotor 100 handelt. Mit Hilfe der Steuereinrichtung 140 werden die Antriebsmotoren 100 angesteuert und synchronisiert, wobei die Steuereinrichtung 140 mit einer übergeordneten Zentralsteuerung kommuniziert.

Zum direkten Zuführen einer Luftströmung zu einer empfindlichen Komponente 122 weisen die Ventilationsvorrichtungen 134, die hier als Radialgebläse ausgeführt sind, jeweils ein Luftleitelement 142 auf, das zu der Steuereinrichtung 140 bzw. dem Antriebsmotor 100 führt. Dabei sind die Luftleitelemente 142 mit dem jeweiligen Auslass der Ventilationsvorrichtungen 134 verbunden.

Die Luftleitelemente 142 können dabei als starre Luftleitelemente 144 oder als flexible Luftleitelemente 146 ausgebildet sein, mit denen es grundsätzlich möglich ist, eine von der Ventilationsvorrichtung 134 erzeugte Luftströmung um mehrere nicht zu kühlende Bauteile des Transportwagens 28 herum- bzw. an diesen vorbeizuführen.

Um den Effekt einer Kühlung weiter zu verbessern, ist in der Figur 4b zur Unterstützung der Ventilationsvorrichtung 134 an der Vorläufereinheit 88 eine aktive Kühleinheit 148 vorgesehen, welche der Ventilationsvorrichtung 134 über Kühlleitelemente 150 eine gekühlte Atmosphäre zuführt.

Ein weiteres, ebenfalls in Figur 3b dargestelltes Ausführungsbeispiel umfasst an den empfindlichen Komponenten 122 angeordnete Peltier-Elemente 152. Es ist außerdem ein Kühlgehäuse 154 vorgesehen, welches die empfindlichen Komponenten 122, hier beispielhaft den Energiespeicher 118 und die Steuereinrichtung 140, umgibt und die Peltier-Elemente 152 unterbringt bzw. trägt. Durch diese Anordnung wird innerhalb des Kühlgehäuses 154 die Temperatur reduziert. Nicht eigens gezeigt ist ein Ausführungsbeispiel, bei dem die Peltier-Elemente 134 ohne Kühlgehäuse 154 direkt an den atmosphärenempfindlichen Komponenten 122 angebracht sind. Solche Peltier-Elemente können beispielsweise auch von der oben genannten Kühleinheit 148 umfasst sein.

Die Energieversorgung der mitgeführten Kompensationsvorrichtung 126 erfolgt bei den vorliegenden Ausführungsbeispielen über die vom Transportwagen 28 ebenfalls mitgeführte autarke Energieversorgungseinrichtung 116. Ein nicht eigens gezeigtes Ausführungsbeispiel umfasst ferner aber auch eine eigens für die Kompensationsvorrichtung 126 eingerichtete zweite Energieversorgungseinrichtung, die unabhängig von der ersten Energieversorgungseinrichtung 116 die Kompensationsvorrichtung 126 mit Energie versorgt.

Die Figuren 4, 5a und 5b veranschaulichen mitgeführte Kompensationsvorrichtungen 126 nochmals am Beispiel des oben erwähnten FTS-Transportsystems 32B. Dabei können die Transportwagen 28 auf dem Anlagenboden oder dem Boden 74 des Fahrraumes 34 fahren.

Das Antriebssystem 102 der Transportwagens 28 des FTS-Transportsystems 32B ist vorzugsweise omnidirektional, so dass der Transportwagen 28 aus dem Stand heraus in eine beliebige Richtung fahren kann. Das omnidirektionale Antriebssystem 102 umfasst hierzu an sich bekannte Fahr-Dreh-Module 156. Alternativ können auch beispielsweise Allseitenräder oder Mecanum-Räder vorhanden sein, wie dies an sich im Stand der Technik bekannt ist.

Die Fahr-Dreh-Module 156 umfassen nur in den Figuren 7a und 7b gestrichelt angedeutete Antriebseinheiten 158, die derart mit nach unten vorstehenden Antriebrädern 160 gekoppelt sind, dass die Antriebsräder 160 nicht nur für den Vortrieb des Transportwagens 28 angetrieben, sondern auch jeweils um eine vertikale Drehachse verdreht werden können.

Das Umfeldsensorsystem 80 umfasst vorne und hinten am Fahrwerk 26 des Transportwagens 28 angebrachten Sensoren 162. Mit diesem Umfeldsensorsystem 80 können Hindernisse im Fahrweg des Transportwagens 28, seien es andere Transportwagen 28 oder andere im Bewegungsfeld des Transportwagens 28 auftauchende Gegenstände, erfasst und an die oben genannte Zentralsteuerung übermittelt werden, welche eine alternative Route zum Ziel des Transportwagens 28 berechnet und über die am Transportwagen 28 angebrachte Steuerungseinrichtung 140 entsprechende Steuerbefehle an den Transportwagen 28 weitergibt.

Beim fahrerlosen und sensorgestützten Transportsystem 32B der Figuren 5a und 5b erfolgt die Energieversorgung mittels einer Energieversorgungseinrichtung, die der oben beschriebenen Energieversorgungseinrichtung 116 entspricht, die in den Figuren 4, 5a und 5b jedoch nicht zu erkennen ist.

Bei den fahrerlosen Transportwagen 28 des Transportsystems 32B bilden auch die Sensoren 162 eine atmosphärenempfindliche Komponente 122. Außerdem kann ein Datenträger für Daten vorhanden sein. Grundsätzlich kann unabhängig von der Art des Fördersystem 32 bei einem Transportwagen 28 eine Messeinrichtung vorhanden sein, mittels welcher die Geschwindigkeit des Transportwagens 28 und/oder die Position des Transportwagens 28 entlang der Behandlungsstrecke und/oder das Gewicht des mindestens einen Werkstücks 14 und/oder die Temperatur der Umgebung des Transportwagens 28 erfassbar ist. Auch die Daten einer solchen Messeinrichtung können auf dem Datenträger abgelegt werden. All diese Komponenten und Bauteile können ebenfalls atmosphärenempfindliche Komponenten 122 sein.

Die mitgeführte Kompensationsvorrichtung 126 ist beim fahrerlosen Transportwagen 28 gemäß Figur 5a wieder als Ventilationsvorrichtung 134 ausgebildet und beim Transportwagen 28 gemäß Figur 5b wieder mit Peltier-Elementen 152 ausgestattet. Der Transportwagen 28 umfasst Aufnahmen 164 in einer Seitenfläche 166 oder einer Deckfläche 168 des Transportwagens 28, wobei in Figur 5b an der Deckfläche 168 das Kühlgehäuse 154 vorgesehen ist.

Bei nicht eigens gezeigten Abwandlungen kann die mitgeführte Kompensationsvorrichtung 126 auch anstelle der erläuterten Ausbildungen eine Wärmetauschervorrichtung, ein Siedekühlelement, insbesondere ein Kompressionskühlelement umfassen. Alternativ kann ein Gasspeicher, insbesondere einen Flüssig- oder Druckgasspeicher, vorgesehen sein, welcher die Materialquelle für den mittels der Strömungserzeugungsvorrichtung 132 erzeugbaren Stoffstrom definiert.

Wie oben erwähnt, zeigen die Figuren 6, 7a und 7b das zweite Konzept des Kompensationssystems 124 mit der externen Kompensationsvorrichtung 128, die hier konkret als Anlagenteil 170 des Trockners 14B gekennzeichnet ist. Lediglich beispielhaft wird dieses Konzept im Zusammenspiel mit dem FTS-Transportsystem 32B beschrieben.

Die externe Kompensationsvorrichtung 128 umfasst ebenfalls eine Strömungserzeugungsvorrichtung 132, die bei diesem Ausführungsbeispiel als Ventilationsvorrichtung 172 ausgebildet ist, die mit einem Strömungsleitsystem 174 zusammenarbeitet, welches beispielsweise als Rohrsystem ausgeführt sein kann und durch den unteren Bereich 68 unter dem Behandlungsraumboden 24 in den Fahrraum 34 für das Transportsystem 32 hineinragt.. Das Strömungsleitsystem 174 definiert ein oder mehrere Abgabeelemente 176, die im Fahrraum 34 so angeordnet sind, dass der Transportwagen 28 damit wechselwirken kann.

Mit der Strömungserzeugungsvorrichtung 132 der externen Kompensationsvorrichtung 128 kann ein Stoffstrom, der einen oder mehrere Schadparameter kompensieren kann, insbesondere eine Luftströmung, aus den Abgabeelementen 176 weitgehend direkt auf die oder auf mehrere atmosphärenempfindliche Komponenten 122 gerichtet werden.

Zum direkten Zuführen einer Luftströmung ist an oder zumindest in der Nähe der empfindlichen Komponente 122 des Transportwagens 28 eine zu dem Abgabeelement 176 des Luftleitsystems 174 komplementäre Öffnung 178 vorgesehen, die zu einem im Transportwagen 28 angeordneten internen Strömungssystem 180 führt, das seinerseits einen Strömungsweg hin zu der oder den vorhandenen atmosphärenempfindlichen Komponenten 122 bereitstellt. Dabei kann ein Abgabeelement 176 des Luftleitsystems 174 als eine Art Stutzen in die Öffnung 178 am Transportwagen 28 eintauchen oder auch lediglich im Abstand davon gehalten werden. Die Öffnung 178 stellt somit beispielhaft eine Einrichtung bereit, mittels welcher der Transportwagen 28 mit der externen Kompensationsvorrichtung 128 koppelbar ist.

Wenn das Abgabeelement 176 des Luftleitsystems 174 in die Öffnung 178 am Transportwagen 28 eintauchen soll, muss zwischen diesen Komponenten eine Relativbewegung möglich sein. Hierzu kann einerseits das Abgabeelement 176 verfahrbar sein oder anderseits die Öffnung 178 als eine Art Eingangstrichter auf das Abgabeelement 176 zu bewegbar sein.

Zur Anpassung des Volumenstroms der Stoffströmung ist ferner in dem Strömungsleitsystem 174 eine Verstelleinrichtung 182 angeordnet, mit welcher der Volumenstrom stufenlos eingestellt werden kann und zum Beispiel als pneumatisches Ventil oder als verstellbares Lüftungsgitter ausgebildet sein kann. Alternativ kann der Volumenstrom auch durch die Drehzahl und die damit verbundene Förderleistung der Ventilationsvorrichtung 172 eingestellt werden.

In Figur 6 ist auf Grund des Querschnittes nur ein Strömungsrohr oder -kanal des Strömungsleitsystems 174 zu erkennen. In Längsrichtung der Behandlungseinrichtung 14 sind in der Praxis in regelmäßigen oder unregelmäßigen Abständen mehrere solcher Rohre oder Kanäle vorhanden.

Figur 7a veranschaulicht als erste Variante die anlagengestützte Kompensation einer Schadatmosphäre der atmosphärenempfindlichen Komponenten 122 bei einer taktenden Betriebsart des Trockners 14B. Bei der taktenden Betriebsart ist es möglich, die Stillstandpositionen der Transportwagen 28 für jeden Bearbeitungsschritt im Vorhinein festzulegen und damit ausreichend exakt zu kennen. Bei Kenntnis der Positionen der Transportwagen 28 in aufeinanderfolgenden Behandlungsschritten in einer getakteten Produktionslinie können für die entsprechenden Positionen Abgabeelemente 176 des Strömungsleitsystems 174 so angeordnet werden, dass sie zum Zeitpunkt des Stillstands der Transportwagen 28 mit den Transportwagen 28 zusammenarbeiten können.

Somit kann, obwohl keine Kompensationsvorrichtung 126 von den Transportwagen 28 mitgeführt wird, eine Kompensation eines oder mehrere Schadparameter der vorhandenen Schadatmosphäre erreicht werden. Die Abgabeelemente 176 des Strömungsleitsystems 174 können auch beidseitig vorhanden sein; die Transportwagen 28 weisen dann auf beiden Seiten entsprechende Öffnungen 178 auf

Bei einer in Figur 7b veranschaulichten zweiten Variante einer anlagengestützten Kompensationsvorrichtung 128 umfasst das Strömungsleitsystem 174 eine Längsleitung 184, die längs der Antriebsrichtung der Transportwagen 28 im Fahrraum 34 verläuft und jeweils ein oder mehrere Abgabeelemente 176 aufweist.

Damit die Abgabeelemente 176 des Luftleitsystems 174 in die Öffnung 178 der Transportwagen 28 eintauchen können, sind die externe Kompensationsvorrichtung 128, das Luftleitsystem 174 oder auch nur die Abgabeelemente 176 der externen Kompensationsvorrichtung 128 mittels eines nicht eigens dargestellten Linearantriebs senkrecht zur Antriebsrichtung der Transportwagen 28 verfahrbar gelagert. In einem weiteren nicht eigens dargestellten Ausführungsbeispiel ist das Luftleitsystem 174 zum Ausgleich von Schwankungen der Transportwagenpositionen mittels eines weiteren Linearantriebs zusätzlich entlang der Antriebsrichtung der Transportwagen 28 verfahrbar gelagert.

Beim in Figur 7b gezeigten Ausführungsbeispiel ist hierfür auf der zur Mitte des Fahrraumes 34 weisenden Seite der Längsleitung 184 eine ebenfalls längs zur Antriebsrichtung verlaufende schlitzförmige Belüftungsöffnung 186 vorgesehen, welche Dichtelemente 188, bei diesem Ausführungsbeispiel Lamellendichtelemente, aufweist, die die Belüftungsöffnung 186 in einer Schließstellung weitgehend abdichten.

Damit die Gasströmung in das interne Strömungssystem 180 der Transportwagen 28 einströmen kann, weist jeder Transportwagen 28 an seiner Öffnung 178 Freigabeelemente 190 auf, die in den Dichtelemente 188 der Längsleitung 184 bei einer kontinuierlichen Bewegung des Transportwagens 28 ein entlang der Belüftungsöffnung 186 wanderndes Fenster 192 erzeugen. Die Öffnung 178 stellt somit eine alternative Einrichtung bereit, mittels welcher der Transportwagen 28 mit der externen Kompensationsvorrichtung 128 koppelbar ist.

In entsprechender Weise kann auch das oben erläuterte schienengebundene Transportsystem 32a mit einer externen Kompensationsvorrichtung 128 zusammenarbeiten. Wenn ein Transportwagen 28 kein internes Strömungssystem 180 mit einer oder mehreren Zugangsöffnungen 178 aufweist, so können vorhandene Abgabeelemente 176 des Strömungsleitsystems 174 der externen Kompensationsvorrichtung 128 so positioniert sein, dass die atmosphärenempfindlichen Komponenten 122 ausreichend nahe an den Abgabeelementen 176 vorbeigeführt werden können, dass die abgegebene Strömung diese Komponenten 122 erreicht.

Das oben zum Trockner 14B Gesagte gilt sinngemäß entsprechend auch für die Lackierkabine 14A oder andere Behandlungseinrichtungen 14, sofern die Behandlungseinrichtung 14 baulich eine entsprechende externe Kompensationsvorrichtung 128 zulässt.

Bei weiteren, ebenfalls nicht eigens gezeigten Abwandlungen kann auch die externe Kompensationsvorrichtung 128 in den Varianten mit Peltier-Elementen 152, Wärmetauschern, Siedekühlelementen oder dergleichen ausgebildet sein, welche dann in Längsrichtung der Behandlungseinrichtung 14 im Fahrraum 34 angeordnet sind.

Abhängig von der Art der Behandlungseinrichtung 14 kann die Kompensationsvorrichtung 126, 128 kontinuierlich oder intermittierend betrieben werden. Beispielsweise kann der Betrieb der Kompensationsvorrichtung 126, 128 bei einer Lackierkabine 14A unterbrochen werden, wenn im Behandlungsraum 18 keine Applikation einer Beschichtung erfolgt, da dann auch kein Overspray in den Fahrraum 34 strömen kann. Bei einem Trockner 14B kann die Kompensationsvorrichtung 126, 128 beispielsweise lediglich in Abhängigkeit der Temperatur im Fahrraum 34 aktiviert werden, die durch das oben beschriebene Messeinrichtung ermittelt wird, wenn die Temperatur einen vorgegebenen Schwellenwert übersteigt.

## Patentansprüche

1. Behandlungsanlage zum Behandeln von Werkstücken (12), insbesondere zum Beschichten und/oder zum Trocknen von Fahrzeugkarosserien, mit
a) einer Behandlungseinrichtung (14A; 14B) mit einem Gehäuse (16; 56), in dem ein Behandlungsraum (18) untergebracht ist;
b) einem Transportsystem (32A; 32B), welches eine Vielzahl von Transportwagen (28) umfasst, mittels welchen die Werkstücke (12) durch den Behandlungsraum (18) transportierbar sind, wobei jeder Transportwagen (28) ein Fahrwerk (26), ein Antriebssystem (102) und eine Befestigungseinrichtung (42) für zumindest ein Werkstück (12) umfasst, wobei die Befestigungseinrichtung (42) mittels einer Verbindungseinrichtung (40) mit dem Fahrwerk (26) gekoppelt ist und wobei jeder Transportwagen (28) mindestens eine atmosphärenempfindliche Komponente (122) aufweist, deren Betrieb durch einen oder mehrere Schadparameter einer die atmosphärenempfindliche Komponente (122) umgebenden Schadatmosphäre, insbesondere durch die Temperatur oder die Zusammensetzung der umgebenden Schadatmosphäre, beeinträchtigbar ist;
wobei
c) außerhalb des Behandlungsraums (18) ein Fahrraum (34) für das Fahrwerk (26) vorhanden ist, in welchem die Schadatmosphäre herrschen kann, wobei der Fahrraum (34) durch ein Fahrraumgehäuse (36) zumindest bereichsweise begrenzt ist;
d) der Fahrraum (34) über einen Verbindungsdurchgang (38) mit dem Behandlungsraum (18) derart verbunden ist, dass das Fahrwerk (26) eines Transportwagens (28) in dem Fahrraum (34) bewegbar ist und dabei die Befestigungseinrichtung (42) im Behandlungsraum (18) mitgeführt wird und sich die Verbindungseinrichtung (40) durch den Verbindungsdurchgang (38) hindurch erstreckt,
**dadurch gekennzeichnet, dass**
e) eine Kompensationsvorrichtung (126; 128) vorhanden ist, mittels welcher mindestens ein Schadparameter der die atmosphärenempfindliche Komponente (122) umgebenden Schadatmosphäre kompensierbar ist;
wobei
f) ein Transportwagen (28) die Kompensationsvorrichtung (126), insbesondere eine Kühlvorrichtung (130), mit sich führt;
und/oder
ein Transportwagen (28) eingerichtet ist, mit der Kompensationsvorrichtung (126), insbesondere einer Kühlvorrichtung (130), zusammenzuarbeiten und eine Koppeleinrichtung (178; 190) umfasst, mittels welcher der Transportwagen (28) mit der Kompensationsvorrichtung (126) koppelbar ist.

2. Behandlungsanlage nach Anspruch 1, **dadurch gekennzeichnet, dass** die Kompensationsvorrichtung (126; 128) eine bezogen auf den Transportwagen (28) externe Kompensationsvorrichtung (128) ist und eine Strömungserzeugungsvorrichtung (132; 172) umfasst, mittels welchem ein einen oder mehrere Schadparameter kompensierender, insbesondere kühlender und/oder die umgebende Schadatmosphäre verdrängender, Stoffstrom, insbesondere ein Gasstrom, auf die atmosphärenempfindliche Komponente (122) erzeugbar ist.

3. Behandlungsanlage nach Anspruch 2, **dadurch gekennzeichnet, dass** die Strömungserzeugervorrichtung (132) ein Strömungsleitsystem (174) umfasst, mittels welchem der Stoffstrom, insbesondere der Gasstrom, in den Fahrraum (34) leitbar ist.

4. Behandlungsanlage nach einem der Ansprüche 1 bis 3, **dadurch gekennzeichnet, dass** die vom Transportwagen (28) mitgeführte Kompensationsvorrichtung (126) umfasst:
a) eine Strömungserzeugungsvorrichtung (132), insbesondere eine Ventilationsvorrichtung (134), mittels welcher ein einen oder mehrere Schadparameter kompensierender, insbesondere kühlender und/oder die umgebende Schadatmosphäre verdrängender, Stoffstrom, insbesondere ein Gasstrom, auf die atmosphärenempfindliche Komponente (122) erzeugbar ist; und/oder
b) eine Wärmetauschervorrichtung; und/oder
c) ein Siedekühlelement, insbesondere ein Kompressionskühlelement;
und/oder
d) einen thermoelektrischen Wandler, insbesondere ein Peltier-Element (152);
und/oder
e) einen Gasspeicher, insbesondere einen Flüssig- oder Druckgasspeicher.

5. Behandlungsanlage nach einem der Ansprüche 1 bis 4, **dadurch gekennzeichnet, dass** der Transportwagen (28) wenigstens ein Strömungsleitelement (142; 144; 146; 150) umfasst, mittels welchem ein einen oder mehrere Schadparameter kompensierender, insbesondere kühlender und/oder die umgebende Schadatmosphäre verdrängender, Stoffstrom, insbesondere ein Gasstrom, auf die atmosphärenempfindliche Komponente (122) leitbar ist.

6. Behandlungsanlage nach einem der Ansprüche 1 bis 5, **dadurch gekennzeichnet, dass** die mindestens eine atmosphärenempfindliche Komponente (122) des Transportwagens (28) eine der folgenden Komponenten ist:
a) ein Sensor (162) eines Umfeldsensorsystems (80) des Transportwagens (28), mittels welchem Hindernisse erfassbar sind; und/oder
b) eine Messeinrichtung, mittels welcher die Geschwindigkeit des Transportwagens (28) und/oder die Position des Transportwagens (28) entlang der Behandlungsstrecke und/oder das Gewicht des mindestens einen Werkstücks (12) und/oder die Temperatur der Umgebung des Transportwagens (28) erfassbar ist; und/oder
c) ein Datenträger, mittels welchem durch den Sensor (162) und/oder die Messeinrichtung erzeugte Daten speicherbar sind; und/oder
d) eine Energieversorgungseinrichtung oder eine autarke Energieversorgungseinrichtung (116), mittels welcher das Antriebssystem (102) des Transportwagens (28) mit Energie versorgbar ist; und/oder
e) eine Komponente (88, 90; 96; 104; 106; 108; 156; 160) des Fahrwerks (26); und/oder
f) Energieübertragungselemente, insbesondere zum Übertragen von elektrischer Energie, des Antriebssystems (102).

7. Behandlungsanlage nach einem der Ansprüche 1 bis 6, **dadurch gekennzeichnet, dass** die Schadatmosphäre in dem Fahrraum (34) dadurch entsteht, dass
a) heiße und/oder lösemittelangereicherte Trocknungsluft aus dem einen Trocknungsraum bildenden Behandlungsraum (18) durch den Verbindungsdurchgang (38) in den Fahrraum (34) strömt;
oder
b) mit Overspray beladene Luft aus dem einen Beschichtungsraum bildenden Behandlungsraum (18) durch den Verbindungsdurchgang (38) in den Fahrraum (34) strömt.

8. Verfahren zum Behandeln von Werkstücken, insbesondere zum Beschichten und/oder zum Trocknen von Fahrzeugkarosserien, umfassend
a) Transportieren von Werkstücken (12) durch einen Behandlungsraum (18) mittels eines Transportsystems (32), welches eine Vielzahl von Transportwagen (28) umfasst, wobei jeder Transportwagen (28) ein Fahrwerk (26), ein Antriebssystem (102) und eine Befestigungseinrichtung (42) für zumindest ein Werkstück (12) umfasst, wobei die Befestigungseinrichtung (42) mittels einer Verbindungseinrichtung (40) mit dem Fahrwerk (26) gekoppelt ist;
wobei
b) jeder Transportwagen (28) zumindest eine atmosphärenempfindliche Komponente (122) aufweist, deren Betrieb durch einen oder mehrere Schadparameter einer die atmosphärenempfindliche Komponente (122) umgebenden Schadatmosphäre, insbesondere durch die Temperatur oder die Zusammensetzung der umgebenden Schadatmosphäre, beeinträchtigbar ist;
c) außerhalb des Behandlungsraums (18) ein Fahrraum (34) für das Fahrwerk (26) vorhanden ist, in welchem die Schadatmosphäre herrschen kann, wobei der Fahrraum (34) durch ein Fahrraumgehäuse (36) zumindest bereichsweise begrenzt ist;
d) der Fahrraum (34) über einen Verbindungsdurchgang (38) mit dem Behandlungsraum (18) derart verbunden ist, dass das Fahrwerk (26) eines Transportwagens (28) in dem Fahrraum (34) bewegbar ist und dabei die Befestigungseinrichtung (42) im Behandlungsraum (18) mitgeführt wird und sich die Verbindungseinrichtung (40) durch den Verbindungsdurchgang (38) hindurch erstreckt,
**dadurch gekennzeichnet, dass**
e) mindestens ein Schadparameter der die atmosphärenempfindliche Komponente (122) umgebenden Schadatmosphäre mittels einer Kompensationsvorrichtung (126; 128) kompensiert wird, wobei eine Behandlungsanlage (10) nach einem der Ansprüche 1 bis 7 verwendet wird.

## Claims

1. Treatment facility for treating workpieces (12), in particular for coating and/or for drying vehicle bodies, having
a) a treatment installation (14A; 14B) which has a housing (16; 56) in which a treatment space (18) is accommodated;
b) a transport system (32A, 32B) which comprises a multiplicity of transport carriages (28) by means of which the workpieces (12) are able to be transported through the treatment space (18), wherein each transport carriage (28) comprises a chassis (26), a drive system (102) and a fastening device (42) for at least one workpiece (12), wherein the fastening device (42) is coupled to the chassis (26) by means of a connecting device (40), and wherein each transport carriage (28) has at least one atmosphere-sensitive component (122), the operation of which is capable of being impaired by one or more harm parameters of a harmful atmosphere surrounding the atmosphere-sensitive component (122), in particular by the temperature or the composition of the surrounding harmful atmosphere;
wherein
c) provision is made outside the treatment space (18) of a travel space (34) for the chassis (26), in which the harmful atmosphere can prevail, wherein the travel space (34) is delimited at least regionally by a travel-space housing (36);
d) the travel space (34) is connected via a connecting passage (38) to the treatment space (18) in such a way that the chassis (26) of a transport carriage (28) is movable in the travel space (34) and the fastening device (42) is carried along in the treatment space (18) and the connecting device (40) extends through the connecting passage (38),
**characterized in that**
e) provision is made of a compensation apparatus (126; 128) by means of which compensation is possible for at least one harm parameter of the harmful atmosphere surrounding the atmosphere-sensitive component (122);
wherein
f) a transport carriage (28) carries along the compensation apparatus (126), in particular a cooling apparatus (130);
and/or
a transport carriage (28) is configured to cooperate with the compensation apparatus (126), in particular a cooling apparatus (130), and comprises a coupling device (178; 190) by means of which the transport carriage (28) is able to be coupled to the compensation apparatus (126).

2. Treatment facility according to Claim 1, **characterized in that** the compensation apparatus (126; 128) is an external compensation apparatus (128) in relation to the transport carriage (28) and comprises a flow-generating apparatus (132; 172) by means of which a substance stream, which compensates for one or more harm parameters and in particular is cooling and/or displaces the surrounding harmful atmosphere, in particular a gas stream, to the atmosphere-sensitive component (122) is able to be generated.

3. Treatment facility according to Claim 2, **characterized in that** the flow-generating apparatus (132) comprises a flow-guiding system (174) by means of which the substance stream, in particular the gas stream, is able to be guided into the travel space (34) .

4. Treatment facility according to one of Claims 1 to 3, **characterized in that** the compensation apparatus (126) carried along by the transport carriage (28) comprises:
a) a flow-generating apparatus (132), in particular a ventilation apparatus (134), by means of which a substance stream, which compensates for one or more harm parameters and in particular is cooling and/or displaces the surrounding harmful atmosphere, in particular a gas stream, to the atmosphere-sensitive component (122) is able to be generated; and/or
b) a heat-exchanger apparatus; and/or
c) an evaporative-cooling element, in particular a compression-cooling element;
and/or
d) a thermoelectric transducer, in particular a Peltier element (152); and/or
e) a gas store, in particular a liquid-gas or compressed-gas store.

5. Treatment facility according to one of Claims 1 to 4, **characterized in that** the transport carriage (28) comprises at least one flow-guiding element (142; 144; 146; 150) by means of which a substance stream, which compensates for one or more harm parameters and in particular is cooling and/or displaces the surrounding harmful atmosphere, in particular a gas stream, is able to be guided to the atmosphere-sensitive component (122).

6. Treatment facility according to one of Claims 1 to 5, **characterized in that** the at least one atmosphere-sensitive component (122) of the transport carriage (28) is one of the following components:
a) a sensor (162) of a surroundings-sensor system (80) of the transport carriage (28) by means of which obstacles are able to be detected; and/or
b) a measuring device by means of which the speed of the transport carriage (28) and/or the position of the transport carriage (28) along the treatment path and/or the weight of the at least one workpiece (12) and/or the temperature of the surroundings of the transport carriage (28) are/is able to be detected; and/or
c) a data carrier by means of which data generated by the sensor (162) and/or by the measuring device are able to be stored; and/or
d) an energy-supply device or an autonomous energy-supply device (116) by means of which energy is able to be supplied to the drive system (102) of the transport carriage (28); and/or
e) a component (88, 90, 96; 104; 106; 108; 156; 160) of the chassis (26); and/or
f) energy-transmission elements, in particular for transmitting electrical energy, of the drive system (102).

7. Treatment facility according to one of Claims 1 to 6, **characterized in that** the harmful atmosphere in the travel space (34) arises **in that**
a) drying air which is hot and/or to which solvent has been added flows out of the treatment space (18), which forms a drying space, into the travel space (34) through the connecting passage (38);
or
b) air laden with overspray flows out of the treatment space (18), which forms a coating space, into the travel space (34) through the connecting passage (38).

8. Method for treating workpieces, in particular for coating and/or for drying vehicle bodies, comprising
a) transporting workpieces (12) through a treatment space (18) by means of a transport system (32) which comprises a multiplicity of transport carriages (28), wherein each transport carriage (28) comprises a chassis (26), a drive system (102) and a fastening device (42) for at least one workpiece (12), wherein the fastening device (42) is coupled to the chassis (26) by means of a connecting device (40);
wherein
b) each transport carriage (28) has at least one atmosphere-sensitive component (122), the operation of which is capable of being impaired by one or more harm parameters of a harmful atmosphere surrounding the atmosphere-sensitive component (122), in particular by the temperature or the composition of the surrounding harmful atmosphere;
c) provision is made outside the treatment space (18) of a travel space (34) for the chassis (26), in which the harmful atmosphere can prevail, wherein the travel space (34) is delimited at least regionally by a travel-space housing (36);
d) the travel space (34) is connected via a connecting passage (38) to the treatment space (18) in such a way that the chassis (26) of a transport carriage (28) is movable in the travel space (34) and the fastening device (42) is carried along in the treatment space (18) and the connecting device (40) extends through the connecting passage (38),
**characterized in that**
e) at least one harm parameter of the harmful atmosphere surrounding the atmosphere-sensitive component (122) is compensated by means of a compensation apparatus (126; 128), wherein use is made of a treatment facility (10) according to one of Claims 1 to 7.

## Revendications

1. Installation de traitement destinée à traiter des pièces (12), en particulier à revêtir et/ou sécher des carrosseries de véhicules, ladite installation de traitement comprenant
a) un module de traitement (14A ; 14B) pourvu d'un boîtier (16 ; 56) dans lequel est ménagé un espace de traitement (18) ;
b) un système de transport (32A ; 32B) qui comprend un grand nombre de chariots de transport (28) au moyen desquels les pièces (12) peuvent être transportées à travers l'espace de traitement (18), chaque chariot de transport (28) comprenant un mécanisme de roulement (26), un système d'entraînement (102) et un module de fixation (42) destiné à au moins une pièce (12), le module de fixation (42) étant accouplé au mécanisme de roulement (26) au moyen d'un module de liaison (40) et chaque chariot de transport (28) comportant au moins un composant (122), sensible à l'atmosphère, dont le fonctionnement peut être influencé par un ou plusieurs paramètres nocifs d'une atmosphère nocive entourant le composant (122) sensible à l'atmosphère, en particulier par la température ou la composition de l'atmosphère nocive environnante ;
c) un espace de roulement (34), destiné au mécanisme de roulement (26) dans lequel l'atmosphère nocive peut régner, étant ménagé à l'extérieur de l'espace de traitement (18), l'espace de roulement (34) étant au moins partiellement délimité par un boîtier d'espace de roulement (36) ;
d) l'espace de roulement (34) étant relié à l'espace de traitement (18) par un passage de liaison (38) de manière à ce que le mécanisme de roulement (26) d'un chariot de transport (28) puisse être emmené dans l'espace de roulement (34) et le module de fixation (42) étant transporté dans l'espace de traitement (18) et le module de liaison (40) s'étendant à travers le passage de liaison (38),
**caractérisée en ce que**
e) un dispositif de compensation (126 ; 128) étant prévu qui permet de compenser au moins un paramètre nocif de l'atmosphère nocive entourant le composant (122) sensible à l'atmosphère ;
f) un chariot de transport (28) emmenant le dispositif de compensation (126), en particulier un dispositif de refroidissement (130) ;
et/ou
un chariot de transport étant adapté pour coopérer avec le dispositif de compensation (126), notamment un dispositif de refroidissement (130), et comprenant un module d'accouplement (178 ; 190) qui permet d'accoupler le chariot de transport (28) au dispositif de compensation (126).

2. Installation de traitement selon la revendication 1, **caractérisé en ce que** le dispositif de compensation (126 ; 128) est un dispositif de compensation extérieur (128) par rapport au chariot de transport (28) et comprend un dispositif générateur d'écoulement (132 ; 172) qui permet de générer sur le composant (122) sensible à l'atmosphère un flux de matière, en particulier un flux de gaz, qui compense, en particulier refroidit, un ou plusieurs paramètres nocifs et/ou qui déplace l'atmosphère nocive environnante.

3. Installation de traitement selon la revendication 2, **caractérisé en ce que** le dispositif générateur d'écoulement (132) comprend un système de direction d'écoulement (174) qui permet de diriger le flux de matière, notamment le flux de gaz, jusque dans l'espace de roulement (34).

4. Installation de traitement selon l'une des revendications 1 à 3, **caractérisé en ce que** le dispositif de compensation (126) emmené par le chariot de transport (28) comprend :
a) un dispositif générateur d'écoulement (132), en particulier un dispositif de ventilation (134), qui permet de générer sur le composant (122) sensible à l'atmosphère un flux de matière, en particulier un flux de gaz, qui compense, en particulier refroidit, un ou plusieurs paramètres nocifs et/ou qui déplace l'atmosphère nocive environnante ; et/ou
b) un dispositif échangeur de chaleur ; et/ou
c) un élément de refroidissement par évaporation, en particulier un élément de refroidissement par compression ; et/ou
d) un convertisseur thermoélectrique, notamment un élément à effet Peltier (152) ; et/ou
e) un accumulateur de gaz, notamment un accumulateur de gaz liquide ou comprimé.

5. Installation de traitement selon l'une des revendications 1 à 4, **caractérisée en ce que** le chariot de transport (28) comprend au moins un élément de direction d'écoulement (142 ; 144 ; 146 ; 150) qui permet de diriger sur le composant (122) sensible à l'atmosphère un flux de matière, en particulier un flux de gaz, qui compense, en particulier refroidit, un ou plusieurs paramètres nocifs et/ou qui déplace l'atmosphère nocive environnante.

6. Installation de traitement selon l'une des revendications 1 à 5, **caractérisé en ce que** l'au moins un composant (122), sensible à l'atmosphère, du chariot de transport (28) est l'un des composants suivants :
a) un capteur (162) d'un système de capteurs d'environnement (80) du chariot de transport (28), qui permet de détecter des obstacles ; et/ou
b) un module de mesure qui permet de détecter la vitesse du chariot de transport (28) et/ou la position du chariot de transport (28) le long du parcours de traitement et/ou le poids de l'au moins une pièce (12) et/ou la température de l'environnement du chariot de transport (28) ; et/ou
c) un support de données sur lequel les données générées par le capteur (162) et/ou le module de mesure peuvent être mémorisées ; et/ou
d) un module d'alimentation en énergie ou un module d'alimentation en énergie autonome (116) qui permet d'alimenter le système d'entraînement (102) du chariot de transport (28) en énergie ; et/ou
e) un composant (88, 90 ; 96 ; 104 ; 106 ; 108 ; 156 ; 160) du mécanisme de roulement (26) ; et/ou
f) des éléments de transmission d'énergie, destinés en particulier à transmettre de l'énergie électrique, du système d'entraînement (102).

7. Installation de traitement selon l'une des revendications 1 à 6, **caractérisée en ce que** l'atmosphère nocive est créée dans l'espace de roulement (34) du fait que
a) de l'air de séchage chaud et/ou enrichi en solvant s'écoule de l'espace de traitement (18), qui forme un espace de séchage, à travers le passage de liaison (38) jusque dans l'espace de roulement (34) ;
ou
b) de l'air chargé de brouillard s'écoule de l'espace de traitement (18), qui forme un espace de revêtement, à travers le passage de liaison (38) jusque dans l'espace de roulement (34).

8. Procédé de traitement de pièces, en particulier de revêtement et/ou de séchage de carrosseries de véhicules, ledit procédé comprenant les étapes suivantes
a) transporter des pièces (12) à travers un espace de traitement (18) au moyen d'un système de transport (32) qui comprend un grand nombre de chariots de transport (28), chaque chariot de transport (28) comprenant un mécanisme de roulement (26), un système d'entraînement (102) et un module de fixation (42) destiné à au moins une pièce (12), le module de fixation (42) étant accouplé au mécanisme de roulement (26) au moyen d'un module de liaison (40) ;
b) chaque chariot de transport (28) comportant au moins un composant (122), sensible à l'atmosphère, dont le fonctionnement peut être influencé par un ou plusieurs paramètres nocifs d'une atmosphère nocive entourant le composant (122) sensible à l'atmosphère, en particulier par la température ou la composition de l'atmosphère nocive environnante ;
c) un espace de roulement (34), destiné au mécanisme de roulement (26) dans lequel l'atmosphère nocive peut régner, étant ménagé à l'extérieur de l'espace de traitement (18), l'espace de roulement (34) étant au moins partiellement délimité par un boîtier d'espace de roulement (36) ;
d) l'espace de roulement (34) étant relié à l'espace de traitement (18) par un passage de liaison (38) de manière à ce que le mécanisme de roulement (26) d'un chariot de transport (28) puisse être déplacé dans l'espace de roulement (34) et le module de fixation (42) étant emmené dans l'espace de traitement (18) et le module de liaison (40) s'étendant à travers le passage de liaison (38),
**caractérisé en ce que**
e) au moins un paramètre nocif de l'atmosphère nocive entourant le composant (122) sensible à l'atmosphère est compensé au moyen d'un dispositif de compensation (126 ; 128), une installation de traitement (10) selon l'une des revendications 1 à 7 étant utilisée.
